# EUROPEAN PATENT APPLICATION

(11) **EP 3 474 181 A1**
(43) Date of publication of application: **24.04.2019**
(21) Application number: 17197543.6
(22) Date of filing: 20.10.2017
(51) Int. Cl.: G06K 7/00, G07G 1/00, G06K 9/00

(54) **DEVICE FOR AUTOMATIC RECOGNITION OF PRODUCTS**

(71) Applicant: Checkout Technologies srl, 37122 Verona (IT)
(72) Inventor: Levkovskiy, Jegor, 14020 Villa San Secondo (AT) (IT); Pandian, Enrico, 37129 Verona (IT)
(74) Representative: Bottino, Giovanni

(57) **Abstract**

Device for automatic recognition of products, that can be installed in proximity of a conveyor belt (10) on which one or more products (5, 51) can be placed.

The device comprises one or more video cameras (40) for generating one or more video streams and video stream analysing means (400, 401), which analysing means (400, 401) comprise means for automatic recognition of products (5, 51) and means communicating the recognized products (5, 51) to a device filling in a product list (7).

## Description

The present invention relates to a device for automatic recognition of products, which device can be installed in proximity of a conveyor belt, on which conveyor belt one or more products can be positioned.

Currently known devices for the automatic recognition of products on a conveyor belt employ the barcode scanning of products. Each product has printed on its packaging or on a label applied on the packaging or attached in other manners thereto a univocal barcode that allows the barcode to be scanned in an automatized manner. Then the scanned code will be associated to the product, if it is properly, previously, stored in a database of products and codes connected to each other in a one-to-one relationship.

The use of barcode scanning is extremely economically feasible and easy when products are handled by a user. This typically takes place in the case of a cashier of a cash register in a point of sale for example of a store, or in a self-service point of sale of a store, where the purchaser scans in succession the barcodes of the products he/she has picked up for the checkout.

Currently there are systems where human intervention of a cashier is assisted by automatic recognition of barcodes, such that his/her task is reduced mainly to a check task. This for example allows the same operator to contemporaneously manage several conveyor belts and therefore this allows several contemporaneous checkouts of several purchasers to be carried out.

However such current systems have some technical drawbacks, mainly due to the fact that the products can be placed on the conveyor belt randomly and therefore the barcode can be partially or completely hidden to a scanner. This becomes critical for example when products are put one on another, or in case of rolling bottles, etc. In all such situations the device cannot recognize the product on the conveyor belt and therefore the intervention of the operator is necessary to read the barcode of the unrecognized product. Such drawback is present both in systems using barcode scanners of the conventional type and in systems using barcode recognition by the analysis of a video stream acquired by one or more video cameras.

There is a further drawback in currently known systems, resulting from the fact that in points of sale where there is provided the conveyor belt and an exit lane for the shopping carts adjacent to the conveyor belt, some products are not placed by purchasers on the conveyor belt but are left in the shopping cart and shown to the operator. This takes place above all for heavy products such as water packs, beer packs and the like. In this case the operator has to ask the user to break the packaging and to give him/her a single product, such to purchase it by scanning the barcode.

Also such further situation reduces the performance of currently known devices, that therefore have a particularly high average percentage of unrecognized products little compatible with modern needs of a point of sale.

Therefore currently there is the unsatisfied need for a device and method for recognition of products allowing drawbacks of know devices to be overcome and that drastically reduces the average percentage of unrecognized products.

The present invention aims at overcoming prior art drawbacks by a device as described hereinbefore which further comprises one or more video cameras for generating one or more video streams and means analysing the video streams, which analysing means comprise means for automatic recognition of products and means communicating the recognized products to a device filling in a product list.

Thus the recognition of products, allowing the product list to be progressively filled in, is performed by using one or more video cameras that acquire video streams where products are progressively present and the consequent analysis of video streams by automatic recognition means. The device allows products passing on the conveyor belt to be identified and occurrences thereof to be counted.

Automatic recognition means can be of any currently known type, preferably they comprise one or more neural networks for video stream analysis that are specifically trained and set to recognize visual patterns identifying a series of products previously acquired and available in one or more datasets.

The device for filling in a product list can be integrated with the recognition device of the present invention, or it can be a separate device, for example a preexistent device.

It is clear, although embodiments specifically dedicated to points of sale of stores are described below, how the invention can be applied also to other cases, such as for example chains of product distribution in warehouses.

In one embodiment, a plurality of said video cameras is provided, which video cameras are oriented according to different points of view.

This allows a plurality of video streams to be obtained, each video stream being associated to a corresponding field of view, such that products shows different surfaces to each video camera and the recognition can be more efficacious since it is based on a higher amount of information. Therefore this allows products to be captured from different angle-shots, such to see also products completely hidden in at least one of the views.

According to one embodiment analysing means comprise OCR reading means for alphanumerical characters present on products and/or means identifying and reading barcodes present on products.

Thus it is possible to analyse the video streams by combining the automatic recognition of products with reading of words written on product packaging by OCR technology, and in combination or as an alternative, with barcode scanning. OCR reading and barcode scanning therefore are two techniques that are added to the main technique of automatic visual recognition of products. In one preferred embodiment, on the same video stream these three analysing methods are applied. According to an improvement, the three analysing methods contribute in recognizing the products with different weights: the most important is visual recognition, the second is OCR reading, and the third is barcode scanning. The three analysing methods contribute, with their respective weights, in confirming the passage of one or more known products, in counting the amount of occurrences of each product and in distinguishing the edges of each product in the video streams, such that also two identical products put one on another are counted as two distinct products and not as a single product.

The term barcode means any identification code composed of a set of high contrast graphical elements.

In a further embodiment, the device can be installed in proximity of a point of sale comprising a conveyor belt and an exit lane for the shopping carts adjacent to the conveyor belt. According to such embodiment, one or more of said video cameras are oriented towards the shopping carts. Also in such case the analysing means perform a visual recognition of products, possibly also by the use of OCR reading and barcodes, and the means communicating the recognized products send the collected data to a device filling in a product list.

It is possible to provide a single video camera oriented towards the shopping carts or a plurality of video cameras oriented towards the shopping carts and arranged with different points of view.

Such arrangement allows an analysis of the conveyor belt to be combined with an analysis of shopping carts passing in the lane adjacent to the conveyor belt. Thus possible products that are not placed on the conveyor belt, for example heavier packages, can be directly recognized inside the shopping cart where they are left. Such arrangement allows the average percentage of products not detected by the device to be drastically reduced.

In a further embodiment, the device can be installed in proximity of a conveyor belt having an initial area for loading the products. According to such embodiment, the video cameras oriented towards the shopping carts are placed downstream the loading area along the forward movement direction of the products on the conveyor belt.

By means of such positioning of the video cameras oriented towards the shopping carts, it is possible to generate a plurality of video streams with fields of view downstream the loading area of the conveyor belt and therefore in an area where the shopping cart has been already emptied by most of the products, while possible products the purchaser does not want to place on the conveyor belt only remain in the shopping cart.

The present invention further relates to a method for automatic recognition of products arranged at least on one conveyor belt, which method provides the following steps:
a) acquiring one or more video streams of products;
b) analysing video streams for product recognition;
c) communicating the recognized products to a device filling in a product list.

In one embodiment a plurality of said video streams is acquired from different points of view.

In a further embodiment a space-time analysis is performed to check the presence of the same product in different video streams.

Thus it is possible to check whether a specific product detected in a video stream and an identical product detected in a further video stream are actually the same product.

In a further embodiment a tracking of the same product is carried out in the different video streams.

Thus it is possible to avoid mistaking a possible further identical product that passes afterwards for the originally recognized product: since each product is tracked during its forward movement, it is possible to efficaciously count all the actual occurrences of products that are equal to each other.

In one embodiment a congruity comparison is performed between the visually recognized products and products recognized by OCR reading and/or barcode scanning and a confirmation is asked to the cashier for at least some of the recognized products. For example if some products are actually not recognized by OCR reading and/or by barcode scanning, the device can generate a request for confirmation by a cashier for the visually recognized products. As an alternative, it is possible simply to automatically update the generated list with the results obtained by visual recognition.

Such characteristic is advantageous for all the cases when there is uncertainty of results of the analysis of video streams. The confirmation by the cashier is required for all products not recognized by OCR reading and/or barcode scanning: a picture of the unrecognized product is shown to the operator, with a suggestion generated by the analysis of video streams for visual recognition. If the product not recognized by the OCR reading and/or by barcode scanning is actually the one suggested by the visual recognition, the operator can simply enter a validation without entering the whole name, the code or select it from a product list.

According to a further embodiment the analysis of the video stream is carried out by one or more neural networks, there being provided a step training said neural networks, which training step uses predetermined datasets of products.

Dataset are given as input to the neural network, that adjusts itself for recognizing what is present in the dataset.

For example for the recognition of a product, images of the products are acquired and during training of neural networks some characteristics (pixel color, position and points of view of the product, etc.) of acquired images are slowly modified for the recognition of such dataset.

Thus the neural network learns to recognize not only such dataset, but it is able to recognize situations with changes different from the origin dataset, such as for example a point of view different from those in the dataset, but with enough information to go back to a known product or gesture.

The neural network is also able to perform a self-learning. If the neural network is not able to recognize an item, the latter can be indicated by an operator. The neural network uses information received by the operator to learn to better recognize the product and therefore to improve its performances.

In a particularly advantageous embodiment the method can be carried out for a conveyor belt adjacent to an exit lane for shopping carts and comprises the following steps:
d) acquiring one or more further video streams of products placed in a shopping cart passing in said exit lane;
e) analysing the further video streams for recognition of the products placed in the shopping cart.

These and other characteristics and advantages of the present invention will be more clear from the following description of some embodiments shown in the annexed drawings wherein:
Fig.1 is one embodiment of the device;
Fig.2 is a range of heights for positioning the second video camera;
Fig.3 is a block diagram of the device;
Fig.4 is a flow chart of the method.

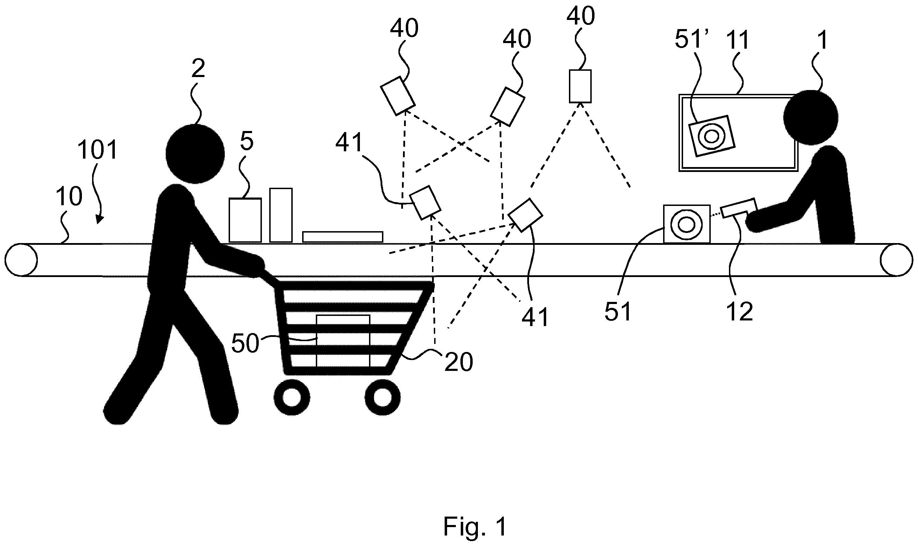

Figure 1 shows one embodiment wherein the device for automatic recognition of products is installed in proximity of a point of sale of a store. The point of sale comprises a conveyor belt 10 and an exit lane for the shopping carts 20, which exit lane is adjacent to the conveyor belt 10.

The point of sale is handled by a cash register operator 1, which operator 1 is provided with a conventional handheld barcode scanner 12.

In figures 1 and 2, the exit lane is run through by a purchaser 2 with a shopping cart 20.

The support surface of the conveyor belt translates towards the operator 1, that is from left to the right in figures, and it is operated by mechanical driving means known in prior art.

The conveyor belt 10 has an initial loading area 101 for the products. In figures 1 and 2 the purchaser 2 has already passed the initial loading area 101, where he/she has put a plurality of products 5 on the conveyor belt 10. The purchaser has left a product 50 within the cart, typically a heavy package.

Products 5 driven by the conveyor belt 10 therefore enter within the range of action of a plurality of video cameras 40 oriented with different points of view. Video cameras 40 are oriented towards the conveyor belt 10 and generate a plurality of video streams where the products 5 appear as they enter the field of view of each video camera 40. Such video streams are analysed by analysing means, which analysing means comprise means automatically recognizing the products 5 on the conveyor belt 10, OCR readers for alphanumerical characters present on the products 5 and/or means identifying and reading barcodes on products.

A part of said video cameras 40, denoted by 41 in the figure, is oriented towards the exit lane, that is towards the shopping cart 20, according to different points of view, for generating further video streams. Such further video streams are analysed by said analysing means for automatically recognizing the products in the cart 20, that is the product 50 in the figure.

Video cameras 41 oriented towards the carts 20 are advantageously placed downstream the loading area 101 along the forward movement direction of the products 5 on the conveyor belt 10, such to acquire the further video streams related to the cart 20 only when it has been properly emptied on the conveyor belt 10, such to contain only products 50, if any, the purchaser does not want to pass on the conveyor belt 10.

Video cameras 40 can be of any currently known type.

Video cameras oriented towards the conveyor belt 10 are preferably placed above the conveyor belt 10, for example by means of specific bridge or C-shaped support elements. Also video cameras 41 oriented towards the carts 20 can be supported by one or more suitable support elements not shown in figure.

The device further comprises means communicating the recognized products to a device filling in a product list, for example a cash register.

Analysing means are configured to carry out a space-time analysis to check the presence of the same product in different video streams.

Analysing means are further configured to track the same product in the different video streams.

Analysing means are further configured to carry out a congruity comparison between visually recognized products and the products recognized by OCR reading and/or barcode scanning and to generate a request for confirmation to a cashier for at least some of the recognized products. In case of uncertainty in the automatic recognition of a product 51, a display 11 shows to the operator 1 a picture 51' of the unrecognized product or of the product recognized only by the visual recognition but not recognized by OCR reading and/or barcode scanning. If automatic recognition means have recognized the product 51, a suggestion is also shown together with **the picture, wherein the image 51' is shown with the** name of the product. If the suggested name corresponds to the product displayed in the picture 51' the operator can simply give confirmation to add the product in the list. On the contrary if the product 51 is not recognized, the picture 51' is displayed and the operator can acquire the barcode of the product 51 by means of his/her handheld barcode scanner 12, such to add the product to the list.

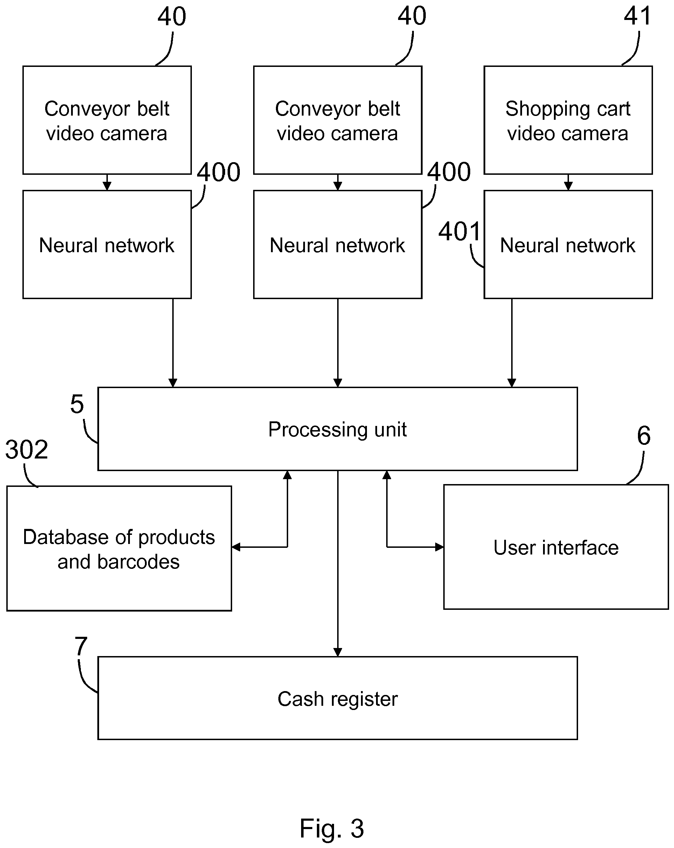

Figure 3 shows a block diagram of the device.

The figure shows only three video cameras 40, of which two video cameras 40 being oriented towards the conveyor belt and one video camera 41 oriented towards the carts. It is specified that in one preferred embodiment there is provided a plurality of video cameras 41 oriented towards the carts.

Video cameras 40 and 41 are connected to product recognition means. Such recognition means can be any type known in prior art and preferably comprise respective neural networks 400 and 401, connected to video cameras 40 and video cameras 41 respectively.

Acquisition systems are connected to a processing unit 5. It is specified that the processing unit 5 is optional, and acquisition systems can dialogue directly with the device filling in the product list, for example the cash register 7. In the embodiment of figure 3, the processing unit 5 handles information received by the three acquisition systems to carry out a space-time analysis to check the presence of the same product in different video streams, to track the same product in the different video streams and to find incongruity between visually recognized products and products recognized by OCR reading and/or barcode scanning and/or non-recognitions.

The processing unit 5 is in communication with a database 302 of products and barcodes associated in one-to-one relationship to identify the products in video streams based on recognized barcodes.

The processing unit 5 dialogues with a user interface subsystem 6, that for example can comprise a display 11 and a mouse and/or keypad or a touch-screen, and a handheld barcode scanner 12, to display the picture and receive a confirmation or intervention by the operator 1.

The data processed by the processing unit 5, with the possible contribution of the user interface subsystem 6, are therefore sent to the cash register 7 for filling in the list of products for checkout.

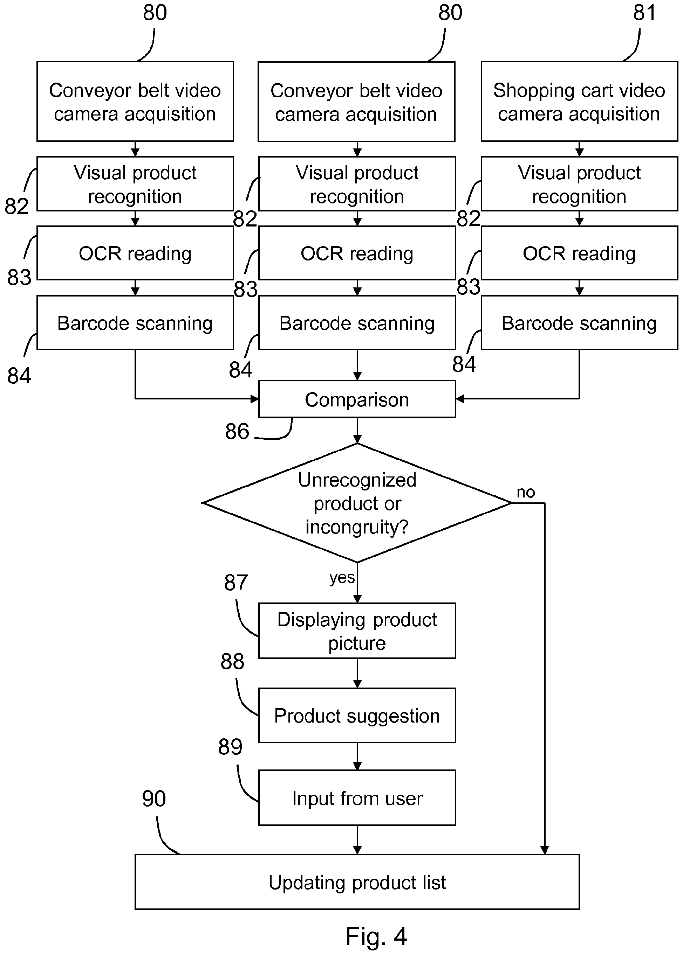

Figure 4 shows a flow chart of the method for automatic recognition of products placed on a conveyor belt according to the present invention.

The method provides the following steps:
- acquiring 80 a plurality of video streams of the products placed on the conveyor belt by a video camera;
- acquiring 81 a plurality of further video streams of the products placed in a cart passing through the exit lane;
- analysing 82 the video streams for visual recognition of the products placed on the conveyor belt and/or in the cart;
- analysing 83 video streams for OCR reading of words written on products placed on the conveyor belt and/or in the cart;
- analysing 84 the video streams for scanning barcodes on products placed on the conveyor belt and/or in the cart.

The above steps can be carried out in a time order different from what set forth.

The method provides also the following steps, not shown in figure:
- space-time analysis for checking the presence of the same product in different video streams;
- tracking the same product in the different video streams.

The steps set forth above can end directly by an end step communicating the recognized products for filling in the product list 90.

In the embodiment of figure 4 optional steps are shown for handling data generated by steps 80 to 84.

In this embodiment there is provided a step 86 comparing the data generated by recognition steps 82, 83 and 84.

If the comparison step 86 defines that no product has been subjected to non-recognition and that no product has been recognized only by visual recognition 82 but not by OCR reading 83 and/or barcode scanning 84, the final step directly takes place communicating the recognized products for filling in the product list 90.

If, as an alternative, a product 51 has not been recognized or has been recognized only by visual recognition 82 but not by OCR reading 83 and/or barcode scanning 84 there is provided a step 87 displaying the picture of the involved product 51.

If the video camera 40 has recognized the product 51, there is provided a step displaying a suggestion 88 together with the picture, wherein the image 51' is given with the name of the suggested product.

If the suggested name corresponds to the product displayed in the picture 51' there is provided a step 89 for the confirmation by the operator 1, who can simply give the confirmation to add the product to the list, or can enter the right name or select it from a list of products, or he/she can scan the barcode of the product.

At the end of such confirmation step 89, the final step communicating the recognized product takes place for filling in the product list 90.

## Claims

1. Device for automatic recognition of products, that can be installed in proximity of a conveyor belt (10) on which one or more products (5, 51) can be placed,
**characterized in that**
it comprises one or more video cameras (40, 41) for generating one or more video streams and video stream analysing means (400, 401), which analysing means (400, 401) comprise means for automatic recognition of products (5, 51) and means communicating the recognized products (5, 51) to a device filling in a product list (7).

2. Device according to claim 1, wherein there is provided a plurality of said video cameras (40, 41), which video cameras (40, 41) are oriented according to different points of view.

3. Device according to claim 1 or 2, wherein the analysing means (400, 401) comprise OCR reading means for alphanumerical characters present on products and/or means identifying and reading barcodes (30) present on products (5, 51).

4. Device according to one or more of the preceding claims, which can be installed in proximity of a point of sale comprising a conveyor belt (10) and an exit lane for the shopping carts (20) adjacent to the conveyor belt (10), in which device one or more of said video cameras (41) are oriented towards the shopping carts (20).

5. Device according to claim 4, which can be installed in proximity of a conveyor belt (10) having an initial area (101) for loading the products (5, 51), in which device said video cameras (41) oriented towards the shopping carts are placed downstream the loading area (101) along the forward movement direction of the products (5, 51) on the conveyor belt (10).

6. Method for automatic recognition of products (5, 51) placed at least on one conveyor belt (10),
**characterized in that**
it provides the following steps:
a) acquiring (80, 81) one or more video streams of products;
b) analysing (82) video streams for product recognition;
c) communicating the recognized products to a device filling in a product list (90).

7. Method according to claim 6, wherein a plurality of said video streams is acquired from different points of view.

8. Method according to claim 7, wherein a space-time analysis is performed to check the presence of the same product in different video streams.

9. Method according to claim 7 or 8, wherein a tracking of the same product in different video streams is carried out.

10. Method according to one or more claims 6 to 9, performable for a conveyor belt (10) adjacent to an exit lane for shopping carts (20), which method comprises the following steps:
d) acquiring (81) one or more further video streams of products placed in a shopping cart passing in said exit lane;
e) analysing (82) the further video streams for recognition of the products placed in the shopping cart.
